# EUROPEAN PATENT APPLICATION

(11) **EP 1 343 101 A1**
(43) Date of publication of application: **10.09.2003**
(21) Application number: 01974896.1
(22) Date of filing: 22.10.2001
(51) Int. Cl.: G06F 17/60

(54) **PURCHASE PAYMENT TRANSFER METHOD**

(30) Priority: 15.12.2000 JP 2000381254
(71) Applicant: Fujimoto, Takashi, Kobe-shi, Hyogo 651-1221 (JP)
(72) Inventor: Fujimoto, Takashi, Kobe-shi, Hyogo 651-1221 (JP)
(74) Representative: Manitz, Finsterwald & Partner GbR
(86) International application number: JP0109275
(87) International publication number: WO02048934

(57) **Abstract**

When a business agreement has been made between a sales company and a purchasing company, the sales company determines a transaction code. The sales company notifies the purchasing company of transaction data including the transaction code, purchase price data, and its own account number data to the purchasing company. A settlement-dedicated computer of the purchasing company transmits the transaction data to a transaction management computer of a transaction center through a line. The transaction management computer provides an instruction to perform a transfer to a bank of the purchasing company through a line. From the bank, the transfer is performed to a bank of the sales company through a line. The transaction management computer which has received a transfer completion notification from the bank notifies the sales company of the transaction code through a line. On the basis of the transaction code, the sales company performs invoice processing.

## Description

### Technical Field

The present invention relates to a system for paying by online transfer for the purchase price of goods (including services).

### Background Art

In general, when business agreements have been made between sales companies and purchasing companies, the sales companies issue invoices to the purchasing companies. The invoices bear purchase prices. The purchasing companies make requests for transferring the purchase prices to the banks that have their accounts. The transfers are made from the bank accounts of the purchase companies to the bank accounts of the sales companies at the request.

When the number of invoices received from one sales company is plural, the purchase company generally makes a request to transfer the purchase prices of the invoices in a lump. In general, the prices are totaled on a monthly basis. In accounting, the sales company needs to sort issued invoices into ones that have already been transferred (processed) and ones that have not transferred (unprocessed) for management. When the transfer is performed in a lump, as in the above, the transferred amount and the prices entered in the invoices do not correspond one to one; therefore, it is troublesome to perform invoice processing.

Sales companies often do business with a large number of purchasing companies, and accordingly, the transfer to the sales companies is performed through a plurality of accounts. Also, the account name of a transfer source sometimes is not the same as that of a purchasing company. Such circumstances make the invoice processing more troublesome. The fact is that sales companies that have a large number of business partners take a great deal of time and manpower for invoice processing.

The present invention has been made in view of the above circumstances, and accordingly, it is an object of the invention to provide a system for purchase payment by transfer, which simplifies and ensures seller's invoice processing.

### Disclosure of Invention

In order to achieve the above object, the present invention provides a purchase payment transfer system including the following steps A to C.
A. A computer of a transaction center receives a transaction code and product purchase-price data from a buyer through a line, the transaction code specifying a transaction that is agreed between a seller of the product and a buyer of the product.
B. The computer instructs a bank of the buyer to transfer the purchase price from the account to the bank account of the seller on the basis of the purchase price data.
C. After the completion of the transfer, the computer transmits the transaction code to the seller through a line.
   In order to achieve the above object, according to another aspect of the present invention, there is provided a purchase payment transfer system including the following steps D to G.
D. A computer of a transaction center receives a transaction code and product purchase-price data from a seller through a line, the transaction code specifying a transaction that is agreed between a seller of the product and a buyer of the product.
E. The computer receives the transaction code and the product purchase-price data from the buyer through a line.
F. The computer instructs a bank of the buyer to transfer the purchase price from the account to the bank account of the seller on the basis of the purchase price data under the condition that the transaction code received from the seller and the transaction code received from the buyer coincide with each other.
G. After the completion of the transfer, the computer transmits the transaction code to the seller through a line.
   In order to achieve the above object, according to another aspect of the present invention, there is provided a purchase payment transfer system including the following steps H to K.
H. A computer of a transaction center receives a transaction code and product purchase-price data from a buyer through a line, the transaction code specifying a transaction that is agreed between a seller of the product and a buyer of the product.
I. The computer instructs a bank of the buyer to escrow the purchase price from the bank account to an escrow account on the basis of the purchase price data.
J. After the buyer has received the product, the computer makes an instruction to transfer the purchase price from the escrow account to the bank account of the seller.
K. After the completion of the transfer, the computer transmits the transaction code to the seller through a line.
   In order to achieve the above object, according to another aspect of the present invention, there is provided a purchase payment transfer system including the following steps L to P.
L. A computer of a transaction center receives a transaction code and product purchase-price data from a seller through a line, the transaction code specifying a transaction that is agreed between a seller of the product and a buyer of the product.
M. The computer receives the transaction code and product purchase-price data from the buyer through a line.
N. The computer instructs a bank of the buyer to escrow the purchase price from the bank account to an escrow account on the basis of the purchase price data under the condition that the transaction code received from the seller and the transaction code received from the buyer coincide with each other.
O. After the buyer has received the product, the computer makes an instruction to transfer the purchase price from the escrow account to the bank account of the seller.
P. After the completion of the transfer, the computer transmits the transaction code to the seller through a line.

In the transfer system according to an embodiment of the invention, the transaction code specifies the individual transaction. After the transfer, the transaction code of a transferred purchase price is transmitted from the transaction center to the seller. The seller performs invoice processing (including electronic data invoices) using the transaction code as key data. Accordingly, even when the purchase prices of a plurality of invoices are transferred in a lump, and when transfers are performed by a large number of buyers, and also when the name of the account of the transfer source and the name of the buyer do not agree with each other, the correspondence between the invoices and the transfer amount can be ensured easily.

### Brief Description of the Drawings

Fig. 1 is a conceptual diagram of a purchase payment transfer system according to an embodiment of the present invention; and
Fig. 2 is a flowchart of the purchase payment transfer system of Fig. 1.

### Best Mode for Carrying Out the Invention

Referring to the drawings, the present invention will be specifically described in accordance with a preferred embodiment.

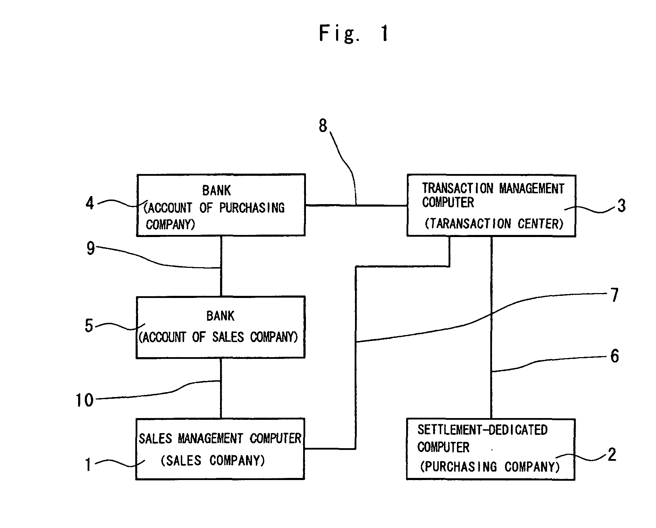

Fig. 1 shows a sales management computer 1 of a sales company (seller), a settlement-dedicated computer 2 of a purchasing company (buyer), a transaction management computer 3 of a transaction center, a bank 4 of the purchasing company, and a bank 5 of the sales company.

The settlement-dedicated computer 2 and the transaction management computer 3 are connected to each other through a cable or radio line 6. The sales management computer 1 and the transaction management computer 3 are also connected to each other through a cable or radio line 7. The lines 6 and 7 are preferably dedicated lines with high concealment. A desired line is a packet telecommunication line (such as "I mode" provided by NTT DoCoMo).

Between the transaction management computer 3 and the bank 4 of the purchasing company, between the bank 4 of the purchasing company and the bank 5 of the sales company, and between the bank 5 of the sales company and the sales management computer 1 are also connected together through cable or radio lines 8, 9, and 10 (preferably, dedicated lines), respectively.

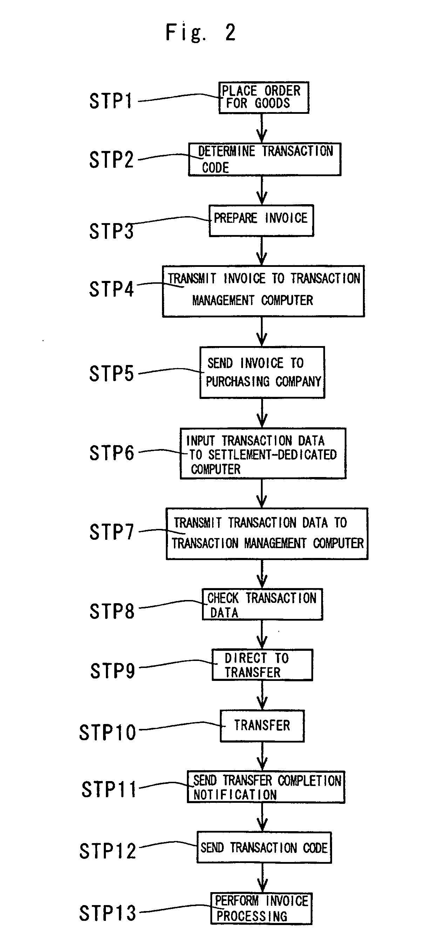

Fig. 2 is a flowchart of the purchase payment transfer system of Fig. 1. By the transfer payment system, first, the purchasing company places an order with the sales company for goods (step 1). The order may be given through a line such as the Internet.

The sales company that has received the order determines a transaction code for specifying the transaction (step 2). The transaction code is determined on the basis of predetermined rules. The transaction code may be determined by code-determination software given from the transaction center to the sales company. After the transaction code has been determined, the sales company prepares an invoice (step 3). The invoice includes the transaction code, sales price data, and sales-company's account number data (hereinafter, collectively referred to as transaction data). The information may be indicated on the invoice in the form of bar code.

The sales company then transmits the invoice to the transaction management computer 3 through the line 7 (step 4). The transaction management computer 3 stores the transaction data recorded on the invoice. Around step 4, the sales company sends the invoice also to the purchasing company (step 5). The sending to the purchasing company may be made through the Internet, etc.

The purchasing company inputs the transaction data recorded on the invoice to the settlement-dedicated computer 2 (step 6). The input is performed with an input device such as a keyboard, a mouse, a pen-input device, and a voice-input device. When the invoice has a bar code indication, the input is performed with a bar-code reader. Of course, the transaction data transmitted from the sales management computer 1 may be directly fetched in the settlement-dedicated computer 2.

The purchasing company which has determined purchase-price payment transmits the transaction data to the transaction management computer 3 through the line 6 (step 7). The transmission may be made periodically (e.g., on a monthly basis). In the case of periodic transmission, a plurality of pieces of transaction data based on a plurality of invoices may be collectively transmitted to the transaction management computer 3.

The transaction management computer 3 checks the transaction data received from the sales company against the transaction data received from the purchasing company (step 8). Under the condition that both data agree with each other, the transaction management computer 3 directs the bank 4 of the purchasing company to transfer the purchase price (step 9). The bank 4 which has received the direction performs a transfer to the bank 5 of the sales company through the line 9 (step 10). When transfers for a plurality of transactions are performed collectively, the total sum of the purchase prices of the transactions is transferred.

After completion of the transfer, the bank 4 sends a transfer completion notification to the transaction management computer 3 through the line 8 (step 11). The transaction management computer 3 which has received the notification transmits a transaction code corresponding to the transfer to the sales management computer 1 through the line 7 (step 12). Generally, a transfer amount, transfer date, transfer destination, and so on are transmitted together with the transaction code.

The sales company performs invoice processing on the basis of the transaction code transmitted in step 12 and the amount of payment to its own bank account (step 13). Specifically, an invoice relating to the payment is extracted from a group of unprocessed invoices and is moved to a group of processed invoices (so-called matching operation). This operation is performed using the transaction code as key data. More specifically, the operation is performed while the transaction code that has been determined and held when the sales company issued the invoice and the transaction code transmitted from the transaction management computer 3. The operation can be performed not by hand but by a computer. Accordingly, even when the purchase prices of a plurality of invoices are transferred in a lump, when transfers are performed by a large number of purchasing companies, and when the name of the account of the transfer source and the name of the purchasing company do not agree with each other, the correspondence between the invoices and the transfer amount can be ensured easily.

The transmission of the transaction data from the settlement-dedicated computer 2 to the transaction management computer 3 (step 7) also serves as an indication of payment by the purchasing company. Therefore, the settlement-dedicated computer 2 must has a high level of security. For example, the settlement-dedicated computer 2 preferably has a read only memory (ROM) in which the password data of an authorized department or person is stored. It is preferable to provide a ROM from which stored contents cannot be easily extracted. Only when password data inputted through a keyboard or the like by an operator coincides with the password data stored in the ROM, the transaction data is transmitted (step 7). Preferably, the settlement-dedicated computer 2 is capable of transmission only to the transaction management computer 3 and is not capable of transmission to other locations (i.e., input of line numbers).

There is no need to necessarily check the transaction data received from the sales company against the transaction data received from the purchasing company in the transaction management computer 3 (step 8). When the check is not necessary, the transmission of the invoice from the sales company to the transaction management computer 3 (step 4) is omitted.

The transaction center may have an escrow function. In such a case, an escrow account is opened. The escrow account is placed under the management of the transaction center. When the transaction management computer 3 has received the transaction data, a purchase price is transferred from the account of the purchasing company to the escrow account (deposit). When a notification of the transfer is sent from the transaction center to the sales company, the sales company ships goods to the purchasing company. The purchasing company which has received the goods notifies the transaction center of that effect. After having received the goods, the transaction center transfers the purchase price from the escrow account to the sales company's account. In other words, the transaction center has a function of keeping the purchase price temporarily. Such processing preferably uses the transaction code as key data.

The transaction center has the escrow function, so that the sales company can dodge risks such as bad debts and confidence games. Also, it becomes unnecessary for the purchasing company to pay in advance; thus, the sales company can avoid the risk of becoming a victim of illegal business practices.

The sales company sometimes purchases goods from the purchasing company. In such a case, when the purchase prices of both the companies are set off, only the balance is transferred. Thus, a transfer fee can be decreased. In the invention, "the transfer of a purchase price" instructed by the transaction management computer 3 includes the transfer of offset balance.

The sales company and the purchasing company are also member stores of a system constructed by the transaction center. The transaction center may perform an inquiry into the financial status of an applicant store for the membership or a member store before or after entry. Also, the transaction center may provide financial information (a settlement status, a capital, transaction results, etc.) of a member store to other member stores with member store's consent. The transaction center may have a function of providing a desired advertisement to other member stores.

The transaction center may collect membership fees from member stores. The collected membership fees may be profits of the transaction center, and part thereof may be used to discount communication costs between the member stores and the transaction center.

The transaction center may serve as a distribution center for controlling transportation companies that carry goods from the sales company to the purchasing company.

### Industrial Applicability

The purchase payment transfer system according to the present invention, as described above, ensures simple invoice processing by the sales company. The transfer system is particularly preferable for corporate transactions (so-called B-to-B transactions) in which the amount of invoices to be processed tends to be massive. The transfer system will contribute to promoting electronic commerce.

## Claims

1. A purchase payment transfer system comprising:
a step in which a computer of a transaction center receives a transaction code and product purchase-price data from a buyer through a line, the transaction code specifying a transaction that is agreed between a seller of the product and a buyer of the product;
a step in which the computer instructs a bank of the buyer to transfer the purchase price from the account to the bank account of the seller on the basis of the purchase price data; and
a step in which, after the completion of the transfer, the computer transmits the transaction code to the seller through a line.

2. A purchase payment transfer system comprising:
a step in which a computer of a transaction center receives a transaction code and product purchase-price data from a seller through a line, the transaction code specifying a transaction that is agreed between a seller of the product and a buyer of the product;
a step in which the computer receives the transaction code and the product purchase-price data from the buyer through a line;
a step in which the computer instructs a bank of the buyer to transfer the purchase price from the account to the bank account of the seller on the basis of the purchase price data under the condition that the transaction code received from the seller and the transaction code received from the buyer coincide with each other; and
a step in which, after the completion of the transfer, the computer transmits the transaction code to the seller through a line.

3. A purchase payment transfer system comprising:
a step in which a computer of a transaction center receives a transaction code and product purchase-price data from a buyer through a line, the transaction code specifying a transaction that is agreed between a seller of the product and a buyer of the product;
a step in which the computer instructs a bank of the buyer to escrow the purchase price from the bank account to an escrow account on the basis of the purchase price data;
a step in which, after the buyer has received the product, the computer makes an instruction to transfer the purchase price from the escrow account to the bank account of the seller; and
a step in which, after the completion of the transfer, the computer transmits the transaction code to the seller through a line.

4. A purchase payment transfer system comprising:
a step in which a computer of a transaction center receives a transaction code and product purchase-price data from a seller through a line, the transaction code specifying a transaction that is agreed between a seller of the product and a buyer of the product;
a step in which the computer receives the transaction code and product purchase-price data from the buyer through a line;
a step in which the computer instructs a bank of the buyer to escrow the purchase price from the bank account to an escrow account on the basis of the purchase price data under the condition that the transaction code received from the seller and the transaction code received from the buyer coincide with each other;
a step in which, after the buyer has received the product, the computer makes an instruction to transfer the purchase price from the escrow account to the bank account of the seller; and
a step in which, after the completion of the transfer, the computer transmits the transaction code to the seller through a line.
